# EUROPEAN PATENT APPLICATION

(11) **EP 4 464 225 A1**
(43) Date of publication of application: **20.11.2024**
(21) Application number: 22919791.8
(22) Date of filing: 08.08.2022
(51) Int. Cl.: A47L 11/24, A47L 11/40

(54) **AUTOMATIC CLEANING APPARATUS**

(30) Priority: 11.01.2022 CN 202220066123 U
(71) Applicant: Beijing Roborock Technology Co., Ltd., Beijing 102206 (CN)
(72) Inventor: LI, Haibin, Beijing 102206 (CN); ZHANG, Zhibin, Beijing 102206 (CN); LIU, Yanhui, Beijing 102206 (CN); XU, Hongliang, Beijing 102206 (CN)
(74) Representative: Petraz, Gilberto Luigi
(86) International application number: PCT/CN2022/110950
(87) International publication number: WO 2023/134154

(57) **Abstract**

An automatic cleaning apparatus, comprising a mobile platform (100), a position determination device (121), and an assembly structure (300), which is configured to assemble the position determination device (121) on the mobile platform (100), wherein the assembly structure (300) comprises an assembly support (310), and the assembly support (310) comprises: a rotor accommodation portion (311), the rotor accommodation portion (311) comprising a first arc-shaped side wall (3111); and a motor accommodation portion (312), the motor accommodation portion (312) comprising a second arc-shaped side wall (3121), the first arc-shaped side wall (3111) of the rotor accommodation portion (311) being smoothly connected to the second arc-shaped side wall (3121) of the motor accommodation portion (312), and the area of an opening formed by the first arc-shaped side wall (3111) being greater than the area of an opening formed by the second arc-shaped side wall (3121); and the position determination device (121) comprises a position determination element (400), and the position determination element (400) comprises: a rotor (320), a rotating shaft of the rotor (320) being approximately arranged at the geometric center of the rotor accommodation portion (311); and a motor (330), an output shaft of the motor (330) being approximately arranged on a connecting line between the geometric center of the motor accommodation portion (312) and the geometric center of the rotor accommodation portion (311).

## Description

### CROSS-REFERENCE TO RELATED APPLICATION

This application claims priority to Chinese patent application No. 202220066123.5, filed on January 11, 2022, which is incorporated herein by reference in its entirety.

### TECHNICAL FIELD

The present disclosure relates to the field of cleaning robot technologies, and in particular, to an automatic cleaning device.

### BACKGROUND

Cleaning robots include sweeping robots, mopping robots, sweeping and mopping integrated robots, and the like. In a travelling process, a cleaning robot needs to ascertain surrounding obstacle conditions, thereby planning a travelling route and avoiding an obstacle based on the obstacle conditions.

In the prior art, position determination devices of the cleaning robots for detecting an obstacle include a laser distance sensor (LDS), a camera, a line laser sensor, an ultrasonic sensor, and the like. Each type of position determination device has its own superiority or inferiority. Because the position determination device has a complex structure and a large size, a larger assembly space of the cleaning robot needs to be occupied, causing an obstacle to arrangement of other components of the cleaning robot. In addition, the assembly space cannot be adjusted based on different sizes of the position determination devices, bringing inconvenience to flexible application of the position determination devices.

### SUMMARY

The present disclosure aims to provide an automatic cleaning device, including a mobile platform, a position determination device, and an assembly structure configured to assemble the position determination device on the mobile platform. The assembly structure includes an assembly bracket, the assembly bracket including: a rotor accommodation portion including a first arc-shaped side wall, and a motor accommodation portion including a second arc-shaped side wall, where the first arc-shaped side wall of the rotor accommodation portion is in smooth connection with the second arc-shaped side wall of the motor accommodation portion, and an area of an opening formed by the first arc-shaped side wall is greater than an area of an opening formed by the second arc-shaped side wall. The position determination device includes a position determination element, the position determining element including: a rotor and a motor, where a rotating shaft of the rotor is substantially disposed in a geometric center of the rotor accommodation portion, and is configured to transmit and/or receive a detection signal or probing signal during continuous rotation; and an output shaft of the motor is substantially disposed on a connecting line between a geometric center of the motor accommodation portion and the geometric center of the rotor accommodation portion, and the motor is configured to connect to the rotor through a power transmission structure to provide a driving force for the rotor.

In some embodiments, the motor accommodation portion further includes:
a first opening, in a bottom surface of the motor accommodation portion, configured to accommodate the motor; and
a first supporting rib extending inwards along an inner side of a side wall of the motor accommodation portion to an edge of the first opening, where
a geometric center of the first opening is closer to the geometric center of the rotor accommodation portion than the geometric center of the motor accommodation portion.

In some embodiments, the rotor accommodation portion further includes:
a second opening, in a bottom surface of the rotor accommodation portion, configured to accommodate the rotor; and
a second supporting rib extending inwards along an inner side of a side wall of the rotor accommodation portion to an edge of the second opening, where
a geometric center of the second opening is equivalent to the geometric center of the rotor accommodation portion.

In some embodiments, the second opening is communicated with the first opening; and an area of the second opening is greater than an area of the first opening.

In some embodiments, the position determination device further includes:
a hood covering a top of the rotor and including a circular top surface, a bottom circular ring, and a plurality of connectors connecting the circular top surface with the bottom circular ring, where the bottom circular ring is fixedly connected to a top surface of the automatic cleaning device; and a first gap is formed between the bottom circular ring and an outer peripheral surface of the rotor.

In some embodiments, the assembly structure further includes:
a circular shielding piece attached to an inner side of the bottom circular ring, where a second gap is formed between the circular shielding piece and the outer peripheral surface of the rotor, and the second gap is smaller than the first gap.

In some embodiments, the circular shielding piece has a width extending in a radial direction and a height extending in an axial direction; and the width of the circular shielding piece is greater than the height of the circular shielding piece.

In some embodiments, the circular shielding piece includes a connector clip fitting the connector; and after the connector clip is clipped into the connector, the circular shielding piece is attached to the inner side of the bottom circular ring.

In some embodiments, an inner wall of the connector includes a first slot; an outer wall of the connector clip includes a projection beam fitting the first slot; and after the projection beam is inserted into the first slot, the circular shielding piece is attached to the inner side of the bottom circular ring.

In some embodiments, the bottom circular ring includes a second slot extending in a circumferential direction of a bottom surface of the bottom circular ring, and a third slot in an inner surface of the bottom circular ring, where the second slot is communicated with the third slots; and the circular shielding piece includes a T-shaped protrusion protruding outwards from an outer wall of the circular shielding piece; and after the T-shaped protrusion is inserted into the third slot, the circular shielding piece is attached to the inner side of the bottom circular ring.

In some embodiments, the third slot is disposed below the connector; and the T-shaped protrusion is disposed below the connector clip.

In some embodiments, the bottom circular ring further includes limiting grooves formed in the inner surface of the bottom circular ring, where the limiting grooves are symmetrically disposed on two sides of the third slot; the circular shielding piece further includes limiting protrusions on two sides of the T-shaped protrusion; and when the circular shielding piece is attached to the inner side of the bottom circular ring, the limiting protrusions are fitted with the limiting grooves.

In some embodiments, the position determination device is a laser distance sensor; the position determination element is a laser distance measurement element; and the detection signal or probing signal is a laser signal.

Compared with the prior art, the embodiments of the present disclosure have the following technical effects:
according to the automatic cleaning device provided in the embodiments of the present disclosure, in an assembly process of the position determination device, the assembly bracket and/or the circular shielding piece having corresponding structures/a corresponding structure are/is provided, so that the position determination element having a size smaller than that of a conventional position determination device can also be assembled in an assembly portion having a size equivalent to a conventional size. This brings convenience for changing a size of a position determination element according to an application requirement.

### BRIEF DESCRIPTION OF THE DRAWINGS

The accompanying drawings, which are incorporated in and constitute a part of the Description, illustrate embodiments consistent with the present disclosure and, together with the Description, serve to explain the principles of the present disclosure. Apparently, the accompanying drawings in the following description show merely some embodiments of the present disclosure, and those of ordinary skill in the art may still derive other drawings from these accompanying drawings without creative efforts.
FIG. 1 is an oblique view of an automatic cleaning device according to some embodiments of the present disclosure.
FIG. 2 is a schematic diagram of a bottom structure of the automatic cleaning device according to some embodiments of the present disclosure.
FIG. 3 is an entire structural diagram of a position determination element according to some embodiments of the present disclosure.
FIG. 4 is an enlarged structural diagram of the position determination element according to some embodiments of the present disclosure.
FIG. 5 is a structural diagram of a module bracket according to some embodiments of the present disclosure.
FIG. 6 is a structural diagram of a hood according to some embodiments of the present disclosure.
FIG. 7 is a partially sectional view of the hood according to some embodiments of the present disclosure.
FIG. 8 is a structural diagram of a circular shielding piece according to some embodiments of the present disclosure.
FIG. 9 is a partially enlarged structural diagram of the circular shielding piece according to some embodiments of the present disclosure.

Reference signs in the accompanying drawings are described as follows:
mobile platform 100; backward portion 110; forward portion 111; perception system 120; buffer 122; cliff sensor 123; control system 130; driving system 140; driving wheel assembly 141; steering assembly 142; cleaning module 150; dry cleaning module 151; side brush 152; assembly portion 200; assembly structure 300; assembly bracket 310; rotor 320; motor 330; hood 340; rotor accommodation portion 311; motor accommodation portion 312; first arc-shaped side wall 3111; second arc-shaped side wall 3121; motor roller 331; conveyor belt 332; first opening 3122; bottom surface 3124 of the motor accommodation portion; first supporting rib 3123; second opening 3112; second supporting rib 3113; bottom surface 3114 of the rotor accommodation portion; circular top surface 341; bottom circular ring 342; connector 343; circular shielding piece 350; connector clip 351; first slot 3431; second slot 3432; third slot 3433; projection beam 3511; projection beam 3511; T-shaped protrusion 3512; limiting groove 3434; and limiting protrusion 3513.

### DETAILED DESCRIPTION

For clearer descriptions of the purposes, technical solutions and advantages in the present disclosure, the present disclosure is further described in detail hereinafter in combination with the accompanying drawings. Apparently, the described embodiments are merely some embodiments, rather than all embodiments, of the present disclosure. Based on the embodiments of the present disclosure, all other embodiments derived by a person of ordinary skill in the art without creative efforts shall fall within the protection scope of the present disclosure.

The terms used in the embodiments of the present disclosure are only for the purpose of describing specific embodiments, but are not intended to limit the present disclosure. The singular forms "a/an", "the" and "said" used in the embodiments and the appended claims of the present disclosure are intended to include the plural forms as well, unless otherwise clearly specified in the context. "A plurality of" generally includes at least two.

It should be understood that the term "and/or" used herein only describes an associated relationship of associated objects, indicating three kinds of relationships. For example, A and/or B can represent that A exists alone, A and B exist concurrently, and B exists alone. In addition, the character "/" herein generally indicates that the associated objects before and after the character are in an "or" relationship.

It should be understood that although the terms "first," "second," "third," etc. may be used in the embodiments of the present disclosure to describe certain objects, these objects should not be limited by these terms. These terms are merely used to distinguish the objects. For example, a first object may also be referred to as a second object, and similarly, a second object may also be referred to as a first object, without departing from the scope of the embodiments of the present disclosure.

It should also be noted that the terms "comprise", "include" or any other variants are intended to cover non-exclusive inclusion, such that the commodities or devices including a series of elements not only include those elements, but also include other unclearly listed elements, or also include the inherent elements of such commodities or devices. Without more limitations, the element defined by the phrase "comprising a ..." does not exclude the existence of other identical elements in the commodity or device that includes such an element.

Alternative embodiments of the present disclosure will be described in detail below with reference to the accompanying drawings.

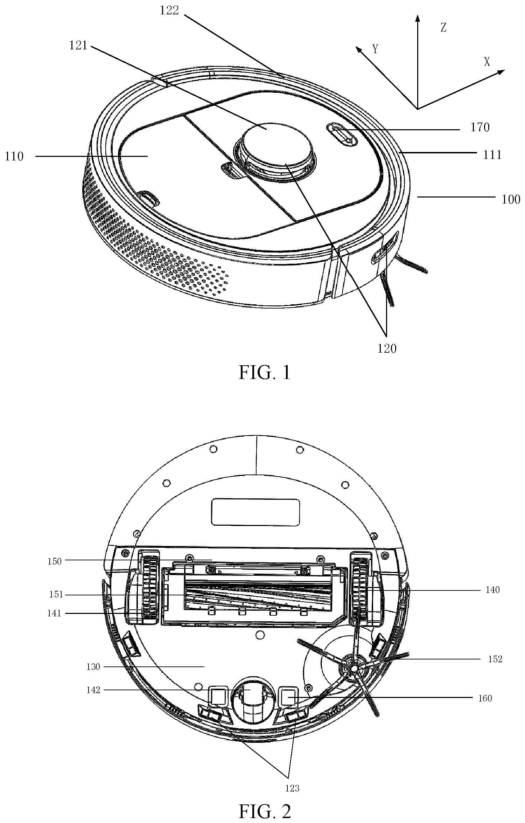

An embodiment of the present disclosure provides an automatic cleaning device. As an example, FIG. 1 and FIG. 2 schematically show schematic structural diagrams of an automatic cleaning device.

As shown in FIGS. 1 and 2, the automatic cleaning device may be a vacuum cleaning robot, a mopping/brushing robot, a window climbing robot, or the like. The automatic cleaning device may include a mobile platform 100, a perception system 120, a control system 130, a driving system 140, a cleaning module 150, an energy system 160, and a human-machine interaction system 170.

The mobile platform 100 may be configured to automatically move on an operation surface in a target direction. The operation surface may be a surface to be cleaned by the automatic cleaning device. In some embodiments, the automatic cleaning device may be a mopping robot, in which case the automatic cleaning device works on a floor, and the floor serves as the operation surface; the automatic cleaning device may also be a window cleaning robot, in which case the automatic cleaning device works on the exterior surface of glass of a building, and the glass serves as the operation surface; and the automatic cleaning device may also be a pipeline cleaning robot, in which case the automatic cleaning device works on the inner surface of a pipeline, and the inner surface of the pipeline serves as the operation surface. Merely for the purpose of illustration, the following descriptions of the present application are given by taking a mopping robot as an example.

In some embodiments, the mobile platform 100 may be an autonomous mobile platform or a non-autonomous mobile platform. The autonomous mobile platform means that the mobile platform 100 itself can automatically and adaptively make operation decisions according to unexpected environmental inputs, while the non-autonomous mobile platform itself, instead of adaptively making operation decisions according to unexpected environmental inputs, can execute given programs or run according to certain logic. Correspondingly, in the case that the mobile platform 100 is the autonomous mobile platform, the target direction may be autonomously determined by the automatic cleaning device; and in the case that the mobile platform 100 is the non-autonomous mobile platform, the target direction may be set systematically or manually. The mobile platform 100 includes a forward portion 111 and a backward portion 110 when the mobile platform 100 is the autonomous mobile platform.

The perception system 120 includes a position determination device 121 located above the mobile platform 100, a buffer 122 located on the forward portion 111 of the mobile platform 100, and sensing devices such as a cliff sensor 123, an ultrasonic sensor (not shown in the figures), an infrared sensor (not shown in the figures), a magnetometer (not shown in the figures), an accelerometer (not shown in the figures), a gyroscope (not shown in the figures) and an odometer (not shown in the figures), which are located at the bottom of the mobile platform for providing various position information and motion state information of the automatic cleaning robot for the control system 130.

For clearer descriptions of the actions of the automatic cleaning device, the following directional definitions are provided: the automatic cleaning device may travel on the floor by various combinations of movement relative to the following three axes perpendicular to each other defined by the mobile platform 100: a transverse axis Y, a front-back axis X, and a central vertical axis Z. A forward driving direction along the front-back axis X is marked as "forward", and a backward driving direction along the front-back axis X is marked as "backward". The transverse axis Y extends substantially between a right wheel and a left wheel of the automatic cleaning device along an axis center defined by a center point of a driving wheel assembly 141. The automatic cleaning device may rotate about the axis Y. It is called "pitch up" when the forward portion of the automatic cleaning device is tilted up and the backward portion thereof is tilted down, and it is called "pitch down" when the forward portion of the automatic cleaning device is tilted down and the backward portion thereof is tilted up. In addition, the automatic cleaning device may rotate around the axis Z. In the forward direction of the automatic cleaning device, it is called "turn right" when the automatic cleaning device is tilted to the right of the axis X, and it is called "turn left" when the automatic cleaning device is tilted to the left of the axis X.

As shown in FIG. 2, the cliff sensors 123 are disposed at the bottom of the mobile platform 100 and in front and rear of the driving wheel assembly 141 and configured to prevent the automatic cleaning device from falling off when the automatic cleaning device moves back, so as to protect the automatic cleaning device against damage. The aforementioned "front" refers to the side in the same direction as the travelling direction of the automatic cleaning device, and the aforementioned "rear" refers to the side in a direction opposite to the travelling direction of the automatic cleaning device.

A specific type of the position determination device 121 includes, but is not limited to, a camera and a laser distance sensor (LDS).

The various components in the perception system 120 may work independently or jointly to achieve intended functions more accurately. The surface to be cleaned is identified by the cliff sensor 123 and the ultrasonic sensor to determine the physical properties including surface materials, the degree of cleanliness, etc. of the surface to be cleaned. The surface to be cleaned may be more accurately identified in combination with the camera, and the laser distance sensor, etc.

For example, whether the surface to be cleaned is a carpet may be determined by the ultrasonic sensor, and if the ultrasonic sensor determines that the surface to be cleaned is made of a carpet material, the control system 130 controls the automatic cleaning device to conduct carpet-mode cleaning.

The buffer 122 is disposed on the forward portion 111 of the mobile platform 100. The buffer 122 detects one or more events (or objects) in a travel path of the automatic cleaning device via the sensor system (for example, an infrared sensor) when the driving wheel assembly 141 propels the automatic cleaning device to walk on the floor in the process of cleaning. The automatic cleaning device may control, according to the events (or objects), such as an obstacle and a wall, detected by the buffer 122, the driving wheel assembly 141 to make the automatic cleaning device respond to the events (or objects), for example, moving away from the obstacle.

The control system 130 is disposed on a main circuit board in the mobile platform 100, and includes a computing processor, such as a central processing unit or an application processor, which communicates with non-temporary memories, such as a hard disk, a flash memory and a random access memory. The application processor is configured to receive environmental information sensed by the plurality of sensors and transmitted from the perception system 120, to draw, by using a positioning algorithm (for example, SLAM) according to obstacle information fed back by the laser distance sensor, a simultaneous map of an environment where the automatic cleaning device is located, autonomously determine the travel path according to the environmental information and the environmental map, and then control the driving system 140 to move forward, backward and/or turn according to the autonomously determined travel path. Further, the control system 130 may also determine, according to the environmental information and the environmental map, whether to activate the cleaning module 150 to perform a cleaning operation.

Specifically, the control system 130 may comprehensively determine a current working state (such as crossing a threshold, moving onto a carpet, being at a cliff edge or drop-off area, being stuck from above or below, having a full dust box or being lifted up) of the sweeping robot according to distance information and speed information fed back by the buffer 122 and the sensing devices such as the cliff sensor 123, the ultrasonic sensor, the infrared sensor, the magnetometer, the accelerometer, the gyroscope and the odometer. The control system 130 may also give specific strategies for next actions according to different situations, making the work of the automatic cleaning device more in line with the requirements of an owner, and achieving better user experience. Furthermore, the control system may plan the most efficient and reasonable cleaning path and cleaning mode based on the information of the simultaneous map drawn by SLAM, which greatly improves the cleaning efficiency of the automatic cleaning device.

The driving system 140 may execute a driving command based on specific distance and angle information, such as x, y and θ components and thus control the automatic cleaning device to travel across the floor. As shown in FIG. 2, the driving system 140 includes a driving wheel assembly 141 and may control a left wheel and a right wheel simultaneously. In order to control the movement of the automatic cleaning device more accurately, the driving system 140 preferably includes a left driving wheel assembly and a right driving wheel assembly that are symmetrically arranged along a transverse axis defined by the mobile platform 100.

For more stable movement on the floor or higher movement ability of the automatic cleaning device, the automatic cleaning device may include one or more steering assemblies 142, which may be driven wheels or driving wheels and may have structural forms that include, but are not limited to, universal wheels. The steering assembly 142 may be located in front of the driving wheel assembly 141.

The energy system 160 includes a rechargeable battery, such as a nickel-hydrogen battery and a lithium battery. The rechargeable battery may be connected to a charging control circuit, a battery pack charging temperature detecting circuit, and a battery undervoltage monitoring circuit which are then connected to a single-chip microcomputer control circuit. A host of the automatic cleaning device is connected to a charging pile by a charging electrode disposed on a side of or below the body of the automatic cleaning device for charging.

The human-machine interaction system 170 includes buttons on a panel of the host for a user to select functions, and may further include a display screen and/or an indicator light and/or a speaker, as well as a mobile phone client program. The display screen, the indicator light and the speaker show the user the current state or function options of the automatic cleaning device. For a route navigation type cleaning device, a mobile phone client may show the user a map of the environment where the device is located, as well as the location of the device, thereby providing the user with richer and more user-friendly function items.

As shown in FIG. 2, the cleaning module 150 may include a dry cleaning module 151.

The dry cleaning module 151 includes a roller brush, a dust box, a fan, and an air outlet. The roller brush with certain interference with the floor sweeps up debris on the floor and rolls up it to the front of a dust suction inlet between the roller brush and the dust box, and then the debris is sucked into the dust box by a gas with a suction force, which is generated by the fan and passes through the dust box. The dust removal capacity of the sweeping robot can be characterized by the dust pickup (DPU) efficiency of the debris, which is affected by the structure and the material of the roller brush, the utilization rate of air in an air passage formed by the dust suction inlet, the dust box, the fan, the air outlet and connecting parts among the dust suction inlet, the dust box, the fan and the air outlet, and the type and the power of the fan, and thus is a complex problem of system design. The improvement of the dust removal capacity is of greater significance to the energy-limited automatic cleaning device than an ordinary plug-in vacuum cleaner. This is because the improvement of the dust removal capacity directly and effectively reduces the demand for energy, i.e., an original cleaning device capable of cleaning 80 square meters of floor with one charge may be improved to clean 180 square meters or more of floor with one charge. In addition, the service life of a battery with a reduced number of charging times may be greatly prolonged, such that the frequency of replacing the battery by the user may be reduced. More intuitively and importantly, the improvement of the dust removal capacity is the most obvious and important user experience as the user can directly draw a conclusion about whether the thorough sweeping/mopping is achieved. The dry cleaning module may further include a side brush 152 provided with a rotating shaft angled with respect to the floor, for moving the debris into a roller brush area of the cleaning module 150.

Optionally, the automatic cleaning device may further include a wet cleaning module configured to clean at least part of the operation surface in a wet cleaning manner. The wet cleaning module includes a water tank, a cleaning head, a driving unit, and the like. Water from the water tank flows along a waterway to the cleaning head, and the cleaning head cleans at least part of the operation surface under the driving of the driving unit. In the related art, the automatic cleaning device includes a position determination device. The position determination device includes a position determination element and a hood. Generally, the position determination element arranged on the automatic cleaning device has a fixed size. The size of the position determination element is substantially fitted with an assembly space. However, when the size of the position determination element needs to be reduced for application of a device, a new module needs to be developed, or a position of a component around an assembly space of the position determination element needs to be adjusted. This brings great inconvenience for flexible application of the position determination element.

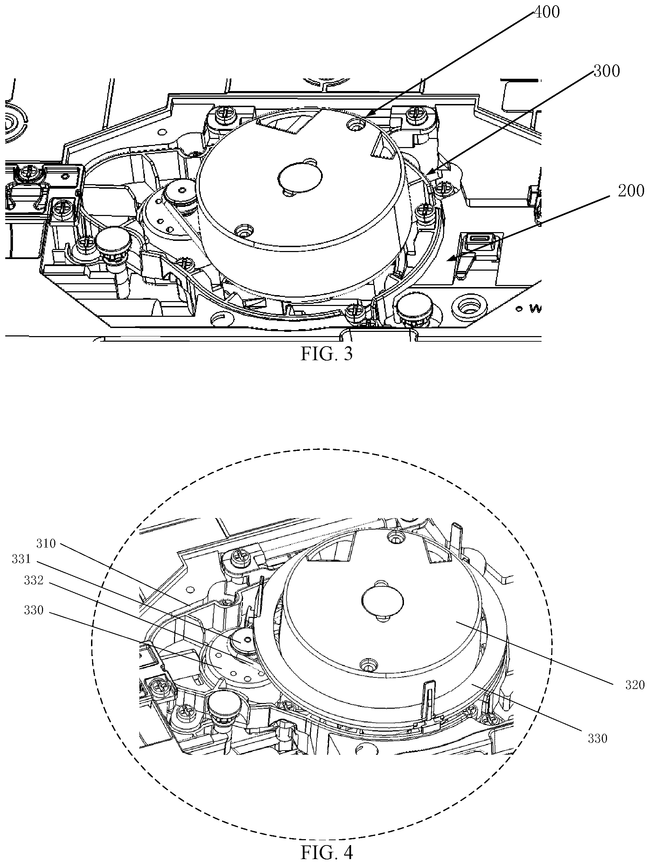

In view of this, an embodiment of the present disclosure provides an automatic cleaning device in which a miniaturized position determination element can be assembled in an original assembly space. The position determination device in this embodiment includes, but is not limited to, a camera and a laser distance sensor (LDS). For ease of understanding, the position determination device in this embodiment is described by using the laser distance sensor as an example. In this embodiment, structures and positional relationships of an assembly bracket, a rotor, a motor, a hood and the like are reasonably disposed, so that the application of the position determination device is more flexible. Same structures have same technical effects, and thus, some of the technical effects are not described in detail herein. Specifically, as shown in FIG. 3, the automatic cleaning device includes an assembly portion 200, an assembly structure 300, and a position determination element 400 that are disposed on a rack or a frame. The position determination element 400 is assembled in the assembly portion 200 through the assembly structure 300. Generally, the assembly portion 200 is a part of the rack, and includes one or more threaded holes. The assembly structure 300 includes one or more corresponding threaded holes. The position determination element 400 is assembled in the assembly portion 200 through bolts. Portions in the automatic cleaning device that are configured to assemble the assembly structure 300 and the position determination element 400 can be considered as the assembly portion 200. Generally, after components of the automatic cleaning device are designed completely, positions and sizes of the components are fixed. Accordingly, a spatial position that is reserved for the assembly portion 200 is also fixed. In this case, when the position determination element of the automatic cleaning device needs to be replaced with one having a smaller size, it cannot be adapted or fitted to the reserved assembly portion 200. In view of this, the assembly structure and a structure of the position determination element of the automatic cleaning device in this embodiment of the present disclosure are improved as follows.

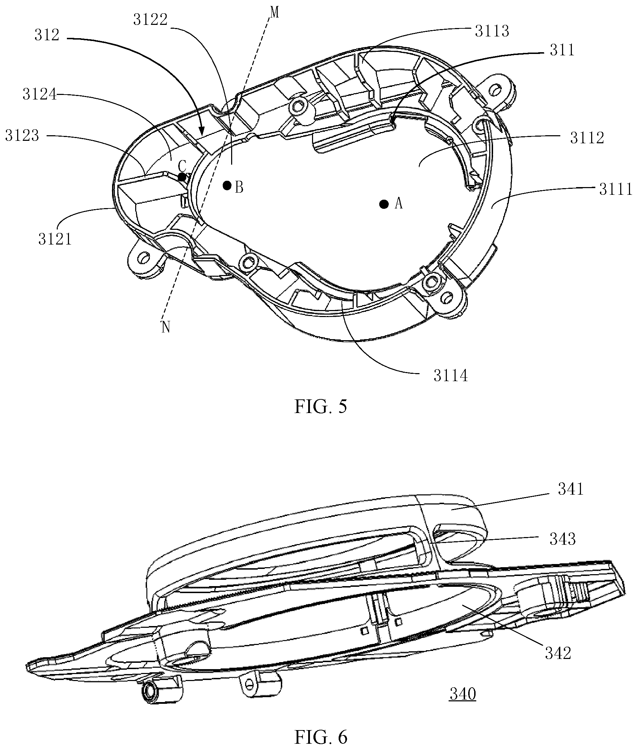

As shown in FIG. 4, the assembly structure 300 includes an assembly bracket 310. The position determination device includes a rotor 320, a motor 330, a hood 340, and the like. The assembly bracket 310 is fixed on the assembly portion 200 through threaded holes in a periphery of the bracket. The rotor 320 and the motor 330 are disposed in the assembly bracket 310. The hood 340 covers a top of the rotor 320, to perform functions of shielding and protecting. The rotor 320 protrudes from a top surface of the automatic cleaning device. The rotor 320 incessantly detects or probes an obstacle in a travelling process of the automatic cleaning device by performing continuous rotary scanning within a range of 360 degrees. As shown in FIG. 5, the assembly bracket 310 includes a rotor accommodation portion 311 and a motor accommodation portion 312. The rotor accommodation portion 311 includes a first arc-shaped side wall 3111. The first arc-shaped side wall 3111 may be a circular arc-shaped side wall or an arc-shaped side wall of another curvature. The circular arc-shaped side wall is at least one part of a circle. As shown in FIG. 5, the first arc-shaped side wall 3111 may be a large part of a circular structure, for example, may be a portion of a circle within a range of 180 degrees to 270 degrees. The motor accommodation portion 312 includes a second arc-shaped side wall 3121. The second arc-shaped side wall 3121 may be a part of the circular structure, or may be formed by splicing arc-shaped structures having different radians, or may be formed by splicing a circular structure or a radian structure with a linear structure, or the like. This is not limited herein. The first arc-shaped side wall 3111 of the rotor accommodation portion is in smooth connection with the second arc-shaped side wall 3121 of the motor accommodation portion. As shown in FIG. 5, the rotor accommodation portion 311 and the motor accommodation portion 312 are approximately divided by MN. An area of an opening formed by the first arc-shaped side wall 3111 is greater than an area of an opening formed by the second arc-shaped side wall 3121. The position determination element 400 includes the rotor 320. A rotating shaft of the rotor 320 is approximately disposed in a geometric center of the rotor accommodation portion 311. When the first arc-shaped side wall 3111 is a circular arc-shaped side wall, the geometric center of the rotor accommodation portion 311 is equivalent to a center of a circle to which the first arc-shaped side wall 3111 is located. When the first arc-shaped side wall 3111 is a combination of arc-shaped structures having different curvatures, the geometric center of the rotor accommodation portion 311 is equivalent to a center of a circle in which a circular arc having the largest radian is located, for example, as indicated at point A shown in FIG. 5. The rotor 320 is configured to transmit and/or receive a probing signal, for example, visible light and/or invisible light, or the like, while rotating continuously. In this case, compared with a rotor in a conventional position determination element, the rotor 320 has a smaller diameter. That is, compared with the rotor in the conventional position determination element, the rotor 320 is farther from the first arc-shaped side wall 3111 of the rotor accommodation portion, but is still assembled in the geometric center of the rotor accommodation portion 311, to ensure structural symmetry and stability after rotation. The position determination element 400 includes the motor 330. An output shaft of the motor 330 is approximately disposed at a communicating portion between the rotor accommodation portion 311 and the motor accommodation portion 312, that is, is approximately disposed on a connecting line between a geometric center of the motor accommodation portion and the geometric center of the rotor accommodation portion, for example, as indicated at point B shown in FIG. 5. Specifically, the output shaft is approximately disposed on a connecting line between the geometric center C of the motor accommodation portion and the geometric center A of the rotor accommodation portion, excluding the point A and the point C. In other words, the output shaft is closer to the geometric center A of the rotor accommodation portion than the geometric center C of the motor accommodation portion, so that in a miniaturized position determination element, a motor and a rotor are closer to each other. Therefore, an inner accommodation structure of the assembly bracket fits the motor and the rotor of the position determination element better, thereby enhancing the stability, shortening a size of a transmission element such as a belt, and reducing energy loss and raw material costs. In some embodiments, the communicating portion is approximately disposed between smooth joints between the first arc-shaped side wall 3111 and the second arc-shaped side wall 3121, that is, approximately disposed on an MN connecting line. When the second arc-shaped side wall 3121 is a circular arc-shaped side wall, the geometric center of the motor accommodation portion 312 is equivalent to a center of a circle to which the second arc-shaped side wall 3121 is located. When the second arc-shaped side wall 3121 is a combination of arc-shaped structures having different curvatures, the geometric center of the motor accommodation portion 312 is equivalent to a center of a circle in which a circular arc having the largest radian is located, for example, as indicated at point C shown in FIG. 5. The motor 330 is configured to connect to the rotor through a transmission structure 332 such as a belt, to provide a driving force for the rotor. The motor 330 drives the rotor 320 through a motor roller 331 and a transmission structure 332. The transmission structure 332 may be a belt, a metal belt, an organic material belt, or the like. A rotating shaft of the motor 330 is in hard connection with the motor roller 331. The motor roller 331 rotates freely under the driving of the rotating shaft of the motor.

In some embodiments, the position determination device is a laser distance sensor. The position determination element is a laser distance measurement element. The laser distance measurement element detects distance or position by continuously rotating and transmitting/ receiving a laser signal.

In some embodiments, as shown in FIG. 5, the motor accommodation portion 312 further includes: a first opening 3122 formed in a bottom surface 3124 of the motor accommodation portion 312 and configured to accommodate the motor 330; and a first supporting rib 3123 extending inwards along an inner side of a side wall 3121 of the motor accommodation portion to an edge of the first opening 3122. A geometric center B of the first opening 3122 is closer to the geometric center A of the rotor accommodation portion than the geometric center C of the motor accommodation portion. The geometric center B of the first opening 3122 is approximately disposed in a center of a circle in which a circular arc of the first opening 3122 is located; and the geometric center C of the motor accommodation portion is approximately disposed in a center of a circle in which the side wall 3121 of the motor accommodation portion is located. Generally, a mounting position of a motor with a conventional size is in the geometric center C of the motor accommodation portion. However, when an entire structure of the position determination element is reduced, and the rotor 320 is still in the geometric center A of the rotor accommodation portion, the motor 330 may be assembled at a position close to the rotor to reduce the transmission loss, improve the transmission efficiency and enhance the belt transmission stability. In this case, a running clearance between the motor 330 and the rotor 320 remains almost constant, so that equivalent transmission efficiency can be maintained. Therefore, the setting is suitable for a more miniaturized position determination element; no additional die sinking is required to reduce the cost; and the motor is closer to the rotor, so a transmission device such as a belt is eliminated to further reduce the cost. Moreover, the transmission resistance is reduced; and the transmission efficiency is improved. In this case, to enhance the stability and rigidity of the assembly bracket 310, the first supporting rib 3123 needs to be additionally provided. Particularly, the first supporting rib 3123 is longer at a distance farther from the motor.

In some embodiments, as shown in FIG. 5, the rotor accommodation portion 311 further includes: a second opening 3112 formed in a bottom surface 3114 of the rotor accommodation portion 311 and configured to accommodate the rotor 320; and a second supporting rib 3113 extending inwards along an inner side of a side wall 3111 of the rotor accommodation portion to an edge of the second opening 3112. The second supporting rib 3113 can enhance the stability and rigidity of the assembly bracket 310. A geometric center of the second opening 3112 is equivalent to the geometric center of the rotor accommodation portion 311, and is approximately disposed in a center of a circle in which the side wall 3111 of the rotor accommodation portion is located, to ensure the structural symmetry and the stability of the rotor after rotation.

In some embodiments, as shown in FIG. 5, the second opening is communicated with the first opening; and an area of the second opening is greater than an area of the first opening. Because the second opening is communicated with the first opening, processing procedures of a bracket structure are reduced. The communicating structure also helps the motor drive rotation of the rotor through a conveyor belt.

In some embodiments, as shown in FIG. 6, the position determination device further includes a hood 340 covering a top of the rotor 320. The hood 340 can block stray light entering the position determination device, can also block dust, an impurity, or the like entering the position determination device, and can also shield parts inside the position determination device, thereby providing an attractive appearance. After being equipped with a pivot structure, the hood 340 can also avoid a pendulous obstacle. The hood 340 includes a circular top surface 341, a bottom circular ring 342, and a plurality of connectors 343 connecting the circular top surface 341 with the bottom circular ring 342. In some embodiments, the bottom circular ring 342 has a bottom plate extending horizontally at the bottom of the bottom circular ring. The bottom circular ring 342 and the bottom plate are fixedly connected to each other or formed integrally. The bottom plate is used for pivot connection between the hood 340 and a top surface of the mobile platform. A first gap is formed between the bottom circular ring 342 and an outer peripheral surface of the rotor 320. Gaps are formed among the plurality of connectors 343, so that a detection signal or probing signal, for example, visible light and/or invisible light, or the like can be transmitted and/or received via rotation of the rotor. In addition, because the rotor structure in this embodiment is a miniaturized rotor, and a size of the hood 340 is equivalent to that of a hood in a conventional position determination device, the first gap is greater than a conventional gap.

In some embodiments, to solve technical problems caused by the over-large first gap, for example, stray light, dust, impurity, or the like enters the gap, and parts inside the position determination device are exposed, the entire size of the hood may be reduced to reduce a distance of the first gap. For example, in some embodiments, the hood 340 includes a circular top surface 341, a bottom circular ring 342, and a plurality of connectors 343 connecting the circular top surface 341 with the bottom circular ring 342. The bottom circular ring 342 has a bottom plate extending horizontally at the bottom of the bottom circular ring. The bottom circular ring 342 and the bottom plate are fixedly connected to each other or formed integrally. The bottom plate is used for pivot connection between the hood 340 and the top surface of the mobile platform. A second gap is formed between the bottom circular ring 342 and an outer peripheral surface of the rotor 320. The second gap is smaller than the first gap. Due to such a second gap, the bottom circular ring 342 is as close as possible to the outer peripheral surface of the rotor 320 without affecting the rotation of the rotor. For example, there is a distance ranging from 1 mm to 5 mm between the bottom circular ring 342 and the outer peripheral surface of the rotor 320.

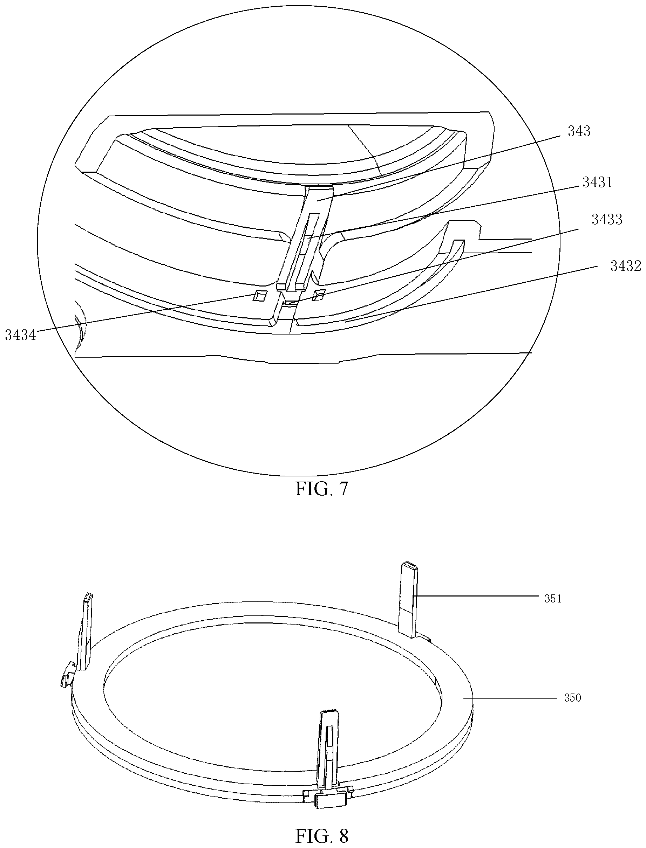

As shown in FIG. 7 to FIG. 9, in some embodiments, to solve technical problems caused by the over-large first gap, the assembly structure 300 further includes a circular shielding piece 350 attached to an inner side of the bottom circular ring 342. A second gap is formed between the circular shielding piece 350 and an outer peripheral surface of the rotor 320. The second gap is smaller than the first gap. The second gap is configured to enable the rotor to rotate flexibly. Due to such a second gap, the circular shielding piece 350 is as close as possible to the outer peripheral surface of the rotor 320 without affecting the rotation of the rotor. For example, there is a distance ranging from 1 mm to 5 mm between the circular shielding piece 350 and the outer peripheral surface of the rotor 320.

In some embodiments, as shown in FIG. 8, the circular shielding piece 350 has a width extending in a radial direction and a height extending in an axial direction; and the width of the circular shielding piece is greater than the height thereof. The width of the circular shielding piece 350 extending in the radial direction is large enough to block incidence of stray light caused by the over-large size of the first gap. The height of the circular shielding piece 350 extending in the axial direction can facilitate assembling the circular shielding piece 350 to an inner side of the bottom circular ring 342.

In some embodiments, as shown in FIG. 8, the circular shielding piece 350 includes connector clips 351 fitting the connectors 343. After the connector clips 351 are clipped into the connectors 343, the circular shielding piece 350 is attached to the inner side of the bottom circular ring 342. The connector clips 351 are disposed in one-to-one correspondence with the connectors 343. The third slot 3433 is disposed below the connector 343. The T-shaped protrusion 3512 is disposed below the connector clip 351. After the connector clip 351 is clipped into an inner side wall of the connector 343, the thickness of the connector 343 is increased, so that the first gap is reduced. Therefore, stray light entering the rotor 320 can be further reduced.

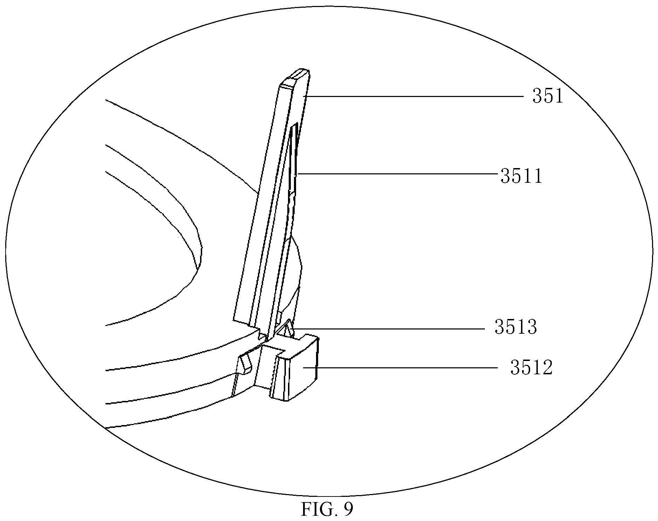

In some embodiments, as shown in FIG. 7, an inner wall of each connector 343 includes a first slot 3431. An outer wall of each connector clip 351 includes a projection beam 3511 fitting the first slot 3431. After the projection beam 3511 is inserted into the first slot 3431, the circular shielding piece 350 is attached to the inner side of the bottom circular ring 342. After the projection beam 3511 is inserted into the first slot 3431, the circumferential stability of the circular shielding piece 350 is ensured. In some embodiments, as shown in FIG. 7, the bottom circular ring includes a second slot 3432 extending in a circumferential direction of the bottom surface of the bottom circular ring, and a third slot 3433 located in an inner surface of the bottom circular ring 342, where the second slot 3432 is communicated with the third slots 3433. As shown in FIG. 9, the circular shielding piece 350 includes a T-shaped protrusion 3512 protruding outwards from an outer wall of the circular shielding piece 350. After the T-shaped protrusion 3512 is inserted into the third slot 3433, the circular shielding piece 350 is attached to the inner side of the bottom circular ring 342. During assembly of the circular shielding piece 350, the T-shaped protrusion 3512 is first inserted along a bottom of the second slot 3432, and then pressed upwards to ensure that the T-shaped protrusion 3512 is inserted into the third slot 3433, thereby further stabilizing circumferential and radial stability of the circular shielding piece 350.

In some embodiments, as shown in FIG. 7, the bottom circular ring 343 further includes limiting grooves 3434 formed in the inner surface of the bottom circular ring 343, where the limiting grooves 3434 are symmetrically formed in two sides of the third slot 3433. The circular shielding piece 350 further includes limiting protrusions 3513 on two sides of the T-shaped protrusion 3512. When the circular shielding piece 350 is attached to the inner side of the bottom circular ring 342, the limiting protrusions 3513 are fitted with the limiting grooves 3434. Matching of the limiting protrusions 3513 and the limiting grooves 3434 further limits a position of the circular shielding piece 350.

According to the automatic cleaning device provided in the embodiments of the present disclosure, by disposing the assembly bracket having a corresponding structure in the position determination device, the position determination element having a size smaller than that of a conventional position determination element can also be assembled in an assembly portion having a size equivalent to a conventional size. This brings convenience for changing a size of the position determination element according to an application requirement.

Finally, it should be noted that the various embodiments in the Description are described in a progressive manner, each embodiment focuses on the differences from the other embodiments, and the same or similar parts between the various embodiments may be referred to each other.

The above embodiments are only used to illustrate, instead of limiting, the technical solutions of the present disclosure. Although the present disclosure is described in detail with reference to the foregoing embodiments, it may be understood by those of ordinary skill in the art that they can still make modifications to the technical solutions disclosed in the above various embodiments or equivalent replacements on part of technical features, and these modifications or replacements do not depart the nature of the corresponding technical solution from the spirit and scope of the technical solutions of the various embodiments of the present disclosure.

## Claims

1. An automatic cleaning device, comprising a mobile platform, a position determination device, and an assembly structure configured to assemble the position determination device on the mobile platform, wherein
the assembly structure comprises an assembly bracket comprising:
a rotor accommodation portion comprising a first arc-shaped side wall; and
a motor accommodation portion comprising a second arc-shaped side wall, wherein the first arc-shaped side wall of the rotor accommodation portion is in smooth connection with the second arc-shaped side wall of the motor accommodation portion; and an area of an opening formed by the first arc-shaped side wall is greater than an area of an opening formed by the second arc-shaped side wall; and
the position determination device comprises a position determination element comprising:
a rotor, wherein a rotating shaft of the rotor is substantially disposed in a geometric center of the rotor accommodation portion, and is configured to transmit and/or receive a detection signal during continuous rotation; and
a motor, wherein an output shaft of the motor is substantially disposed on a connecting line between a geometric center of the motor accommodation portion and the geometric center of the rotor accommodation portion and located between the geometric center of the motor accommodation portion and the geometric center of the rotor accommodation portion, and the motor is configured to connect to the rotor through a power transmission structure to provide a driving force for the rotor.

2. The automatic cleaning device according to claim 1, wherein the motor accommodation portion further comprises:
a first opening, in a bottom surface of the motor accommodation portion, configured to accommodate the motor; and
a first supporting rib extending inwards along an inner side of a side wall of the motor accommodation portion to an edge of the first opening, wherein a geometric center of the first opening is closer to the geometric center of the rotor accommodation portion than the geometric center of the motor accommodation portion.

3. The automatic cleaning device according to claim 2, wherein the rotor accommodation portion further comprises:
a second opening, in a bottom surface of the rotor accommodation portion, configured to accommodate the rotor; and
a second supporting rib extending inwards along an inner side of a side wall of the rotor accommodation portion to an edge of the second opening, wherein
a geometric center of the second opening is equivalent to the geometric center of the rotor accommodation portion.

4. The automatic cleaning device according to claim 3, wherein the second opening is communicated with the first opening; and an area of the second opening is greater than an area of the first opening.

5. The automatic cleaning device according to claim 1, wherein the position determination device further comprises:
a hood covering a top of the rotor and comprising a circular top surface, a bottom circular ring, and a plurality of connectors connecting the circular top surface with the bottom circular ring, wherein the bottom circular ring is fixedly connected to a top surface of the automatic cleaning device; and a first gap is formed between the bottom circular ring and an outer peripheral surface of the rotor.

6. The automatic cleaning device according to claim 5, wherein the assembly structure further comprises:
a circular shielding piece attached to an inner side of the bottom circular ring, wherein a second gap is formed between the circular shielding piece and the outer peripheral surface of the rotor; and the second gap is smaller than the first gap.

7. The automatic cleaning device according to claim 6, wherein the circular shielding piece has a width extending in a radial direction and a height extending in an axial direction; and the width of the circular shielding piece is greater than the height of the circular shielding piece.

8. The automatic cleaning device according to claim 6, wherein the circular shielding piece comprises a connector clip fitting the connector; and after the connector clip is clipped into the connector, the circular shielding piece is attached to the inner side of the bottom circular ring.

9. The automatic cleaning device according to claim 8, wherein an inner wall of the connector comprises a first slot; an outer wall of the connector clip comprises a projection beam fitting the first slot; and after the projection beam is inserted into the first slot, the circular shielding piece is attached to the inner side of the bottom circular ring.

10. The automatic cleaning device according to claim 9, wherein
the bottom circular ring comprises a second slot extending in a circumferential direction of a bottom surface of the bottom circular ring, and a third slot in an inner surface of the bottom circular ring, wherein the second slot is communicated with the third slot; and
the circular shielding piece comprises a T-shaped protrusion protruding outwards from an outer wall of the circular shielding piece, wherein after the T-shaped protrusion is inserted into the third slot, the circular shielding piece is attached to the inner side of the bottom circular ring.

11. The automatic cleaning device according to claim 10, wherein the third slot is disposed below the connector; and the T-shaped protrusion is disposed below the connector clip.

12. The automatic cleaning device according to claim 11, wherein
the bottom circular ring further comprises limiting grooves formed in the inner surface of the bottom circular ring, wherein the limiting grooves are symmetrically formed on two sides of the third slot; and
the circular shielding piece further comprises limiting protrusions on two sides of the T-shaped protrusion; and when the circular shielding piece is attached to the inner side of the bottom circular ring, the limiting protrusions are fitted with the limiting grooves.

13. The automatic cleaning device according to any one of claims 1 to 12, wherein the position determination device is a laser distance sensor; the position determination element is a laser distance measurement element; and the detection signal is a laser signal.
